# EUROPEAN PATENT APPLICATION

(11) **EP 4 848 117 A2**
(43) Date of publication of application: **02.12.2026**
(21) Application number: 26212432.4
(22) Date of filing: 27.01.2025
(51) Int. Cl.: G06F 18/2433

(54) **ABNORMAL SHOPPING BEHAVIOR DETECTION METHOD AND APPARATUS FOR INTELLIGENT SHOPPING CART, AND SHOPPING CART**

(30) Priority: 22.03.2024 CN 202410338478
(62) Document number(s) of the earlier application(s) in accordance with Art. 76 EPC: 25154195.9 / 4 621 729
(71) Applicant: Shanghai Hanshi Information Technology Co. Ltd., Pudong Shanghai 200120 (CN)
(72) Inventor: ZHAO, Jianguo, Shanghai, 200120 (CN); ZHUANG, Yitang, Shanghai, 200120 (CN); HUANG, Sheng, Shanghai, 200120 (CN); FU, Zhe, Shanghai, 200120 (CN)
(74) Representative: Boult Wade Tennant LLP

(57) **Abstract**

An abnormal shopping behavior detection method and apparatus for an intelligent shopping cart, and the shopping cart are disclosed in the present disclosure. The method includes: acquiring code scanning data of commodities and video-frame image data of a basket area during a shopping behavior of a user; segmenting the commodities in an image of each frame in the video-frame image data of the basket area, to obtain image data of each target commodity in the basket area in the image of each frame; tracking a trajectory of each target commodity according to the image data of each target commodity in the basket area among images of a plurality of frames; determining a motion direction and a motion distance of the tracked trajectory of each target commodity according to the trajectory tracking data; determining an indicative state of whether each target commodity is put in or taken out of the shopping cart, according to the motion direction and the motion distance; and detecting an abnormal shopping behavior of the user, according to the code scanning data, the trajectory tracking data and the indicative state of whether each target commodity is put in or taken out of the shopping cart. The present disclosure can accurately detect the abnormal shopping behavior for the intelligent shopping cart.

## Description

### TECHNICAL FIELD

The present disclosure relates to the technical field of self-service shopping, and particularly to an abnormal shopping behavior detection method and apparatus for an intelligent shopping cart, and the shopping cart.

### BACKGROUND

This section is intended to provide the background or the context for the embodiments of the present disclosure set forth in the claims. The description here is not recognized as the prior art just because it is included in this section.

With the continuous development of the technologies such as Internet of Things, artificial intelligence, big data analysis, mobile payment and intelligent hardware, the industry of supermarket is also constantly transforming to the directions of intellectualization and digitalization, which enables supermarkets to better meet the needs of the customers, improve the shopping experience of the customers, optimize the business operations and increase the sales, thereby further expanding the market influence of supermarkets. In this process, the shopping settlement is a crucial part of the shopping process, and the intelligent shopping cart appears in the supermarket environment under this background, which brings a brand-new shopping experience and operation mode to customers and merchants.

Generally, the intelligent shopping cart has a series of advanced functions, including automatic scanning and settlement, navigation and commodity positioning, commodity recognition and weighing, personalized recommendation and advertising, data analysis, inventory management, etc. For example, in terms of self-service code scanning and settlement, many intelligent shopping carts are equipped with built-in scanners, built-in weighing devices and built-in settlement channels, which allow a customer to scan a barcode of a commodity in real time during shopping, to check a total price in real time during shopping, and to complete a payment through a self-service settlement system of the shopping cart before leaving the store. This self-service shopping process simplifies the necessary steps of the traditional shopping and payment, so that the customer does not need to interact with a cashier at a checkout counter, thereby reducing the probability of mistakes and improving the shopping experience. Meanwhile, for a merchant, the cashiers can be decreased and the operation cost can be reduced.

Meanwhile, it is necessary to detect the users' abnormal shopping behaviors when the intelligent shopping cart is actually used in the supermarket scenario. Since the intelligent shopping cart is in self-service use by the consumers, it is inevitable that there will be some behaviors attempting not to follow the normal procedures, and the intelligent shopping cart should discover, and prompt or prevent these behaviors. The existing solution for the intelligent shopping cart to detect the users' abnormal shopping behaviors is not accurate enough.

### SUMMARY

The embodiments of the present disclosure provide an abnormal shopping behavior detection method for an intelligent shopping cart, to improve the accuracy of detecting the abnormal shopping behavior for the intelligent shopping cart, the method including:
acquiring code scanning data of commodities and video-frame image data of a basket area during a shopping behavior of a user;
segmenting the commodities in an image of each frame in the video-frame image data of the basket area, to obtain image data of each target commodity in the basket area in the image of each frame;
tracking a trajectory of each target commodity according to the image data of each target commodity in the basket area among images of a plurality of frames, to obtain trajectory tracking data of each target commodity;
determining a motion direction and a motion distance of the tracked trajectory of each target commodity according to the trajectory tracking data of each target commodity;
determining an indicative state of whether each target commodity is put in or taken out of the shopping cart, according to the motion direction and the motion distance of the tracked trajectory of each target commodity and a preset commodity motion distance threshold; and
detecting an abnormal shopping behavior of the user, according to the code scanning data, the trajectory tracking data of each target commodity in the basket area, and the indicative state of whether each target commodity is put in or taken out of the shopping cart.

The embodiments of the present disclosure further provide an abnormal shopping behavior detection apparatus for an intelligent shopping cart, so as to improve the accuracy of an abnormal shopping behavior detection for the intelligent shopping cart, the apparatus including:
an acquisition unit configured to acquire code scanning data of commodities and video-frame image data of a basket area during a shopping behavior of a user;
a segmentation processing unit configured to segment the commodities in an image of each frame in the video-frame image data of the basket area, to obtain image data of each target commodity in the basket area in the image of each frame;
a trajectory tracking unit configured to track a trajectory of each target commodity according to the image data of each target commodity in the basket area among images of a plurality of frames, to obtain trajectory tracking data of each target commodity;
a trajectory processing unit configured to determine a motion direction and a motion distance of the tracked trajectory of each target commodity according to the trajectory tracking data of each target commodity;
a state determination unit configured to determine an indicative state of whether each target commodity is put in or taken out of the shopping cart, according to the motion direction and the motion distance of the tracked trajectory of each target commodity and a preset commodity motion distance threshold; and
a detection unit configured to detect an abnormal shopping behavior of the user, according to the code scanning data, the trajectory tracking data of each target commodity in the basket area, and the indicative state of whether each target commodity is put in or taken out of the shopping cart.

The embodiments of the present disclosure further provide an intelligent shopping cart, to improve the accuracy of an abnormal shopping behavior detection for the intelligent shopping cart, the intelligent shopping cart including:
a code scanner configured to acquire code scanning data of a commodity during a shopping behavior of a user;
a basket area collection device configured to collect video-frame image data of a basket area; and
the aforementioned abnormal shopping behavior detection apparatus for the intelligent shopping cart.

The embodiments of the present disclosure further provide a computer device, including a memory, a processor and a computer program stored in the memory and executable on the processor, and when executing the computer program, the processor implements the aforementioned abnormal shopping behavior detection method for the intelligent shopping cart.

The embodiments of the present disclosure further provide a computer-readable storage medium, storing a computer program, and when executed by a processor, the computer program implements the aforementioned abnormal shopping behavior detection method for the intelligent shopping cart.

The embodiments of the present disclosure further provide a computer program product, comprising a computer program, and when executed by a processor, the computer program implements the aforementioned abnormal shopping behavior detection method for the intelligent shopping cart.

In the embodiments of the present disclosure, during working, the abnormal shopping behavior detection solution for the intelligent shopping cart includes: acquiring code scanning data of commodities and video-frame image data of a basket area during a shopping behavior of a user; segmenting the commodities in an image of each frame in the video-frame image data of the basket area, to obtain image data of each target commodity in the basket area in the image of each frame; tracking a trajectory of each target commodity according to the image data of each target commodity in the basket area among images of a plurality of frames, to obtain trajectory tracking data of each target commodity; determining a motion direction and a motion distance of the tracked trajectory of each target commodity according to the trajectory tracking data of each target commodity; determining an indicative state of whether each target commodity is put in or taken out of the shopping cart, according to the motion direction and the motion distance of the tracked trajectory of each target commodity and a preset commodity motion distance threshold; and detecting an abnormal shopping behavior of the user, according to the code scanning data, the trajectory tracking data of each target commodity in the basket area, and the indicative state of whether each target commodity is put in or taken out of the shopping cart.

According to the embodiments of the present disclosure, the intelligent shopping cart has the function of abnormal shopping behavior detection in addition to the functions of self-service checkout, intelligent shopping and the like, so that the abnormal shopping behavior of the user can be detected by combining the code scanning data and the collected video-frame image data of the basket area. The abnormal shopping behavior detection solution for the intelligent shopping cart according to the embodiment of the present disclosure has the following advantageous technical effects:

Firstly, the embodiments of the present disclosure segment the commodities in the image of each frame in video-frame image data of a basket area, and track a trajectory of a target commodity, thereby avoiding the problem that the detection result is affected since the commodities are mutually stacked and shielded, and improving the accuracy of the abnormal shopping behavior detection for the intelligent shopping cart.

Secondly, the embodiments of the present disclosure determine a motion direction and a motion distance of each target commodity according to trajectory tracking data of each target commodity; accurately determine an indicative state of whether each target commodity is put in or taken out of the shopping cart according to the direction and the distance, and then accurately detect an abnormal shopping behavior of the user according to the state.

To sum up, the embodiments of the present disclosure can accurately detect the abnormal shopping behavior for the intelligent shopping cart.
Further aspects of the present disclosure as set forth in the following numbered clauses:-
Clause 1. An abnormal shopping behavior detection method for an intelligent shopping cart, comprising:
   acquiring code scanning data of commodities and video-frame image data of a basket area during a shopping behavior of a user;
   segmenting the commodities in an image of each frame in the video-frame image data of the basket area, to obtain image data of each target commodity in the basket area in the image of each frame;
   tracking a trajectory of each target commodity according to the image data of each target commodity in the basket area among images of a plurality of frames, to obtain trajectory tracking data of each target commodity;
   determining a motion direction and a motion distance of the tracked trajectory of each target commodity according to the trajectory tracking data of each target commodity;
   determining an indicative state of whether each target commodity is put in or taken out of the shopping cart, according to the motion direction and the motion distance of the tracked trajectory of each target commodity and a preset commodity motion distance threshold; and
   detecting an abnormal shopping behavior of the user, according to the code scanning data, the trajectory tracking data of each target commodity in the basket area, and the indicative state of whether each target commodity is put in or taken out of the shopping cart.
Clause 2. The method according to clause 1, wherein if a collection device for the video-frame image data of the basket area is an RGB camera, segmenting the commodities in the image of each frame in the video-frame image data of the basket area, to obtain image data of each target commodity in the basket area in the image of each frame comprises:
   segmenting the commodities in the image of each frame in the video-frame image data of the basket area, to output first target masks including each target commodity, and forming a target commodity set according to each target commodity, the corresponding first target masks and image information;
   segmenting an interferent in the image of each frame in the video-frame image data of the basket area, to output a second target mask including a target interferent;
   calculating an intersection over union of the first target mask of the target commodity and the second target mask of the target interferent, to obtain a ratio of overlapping areas of the first target mask and the second target mask; and
   eliminating, when the ratio of overlapping areas of the first target mask and the second target mask is greater than a preset overlapping ratio threshold, the target commodity included in the first target mask as the interferent from the target commodity set.
Clause 3. The method according to clause 2, further comprising: determining that the commodity included in the first target mask is a real commodity and remaining the commodity in the target commodity set, when the ratio of overlapping areas is less than the preset overlapping ratio threshold.
Clause 4. The method according to clause 2, further comprising:
   filtering out a target commodity in motion from the target commodity set and adding the target commodity in motion into a final target commodity set, wherein the image data of each target commodity in the basket area among the images of the plurality of frames is commodity data taken from the final target commodity set;
   preferably wherein
   filtering out the target commodity in motion from the target commodity set and adding the target commodity in motion into the final target commodity set comprises:
      calibrating an area of motion pixels in the image of each frame in the target commodity set, and extracting a binary image mask corresponding to the calibrated area as a foreground mask of the image of each frame;
      cropping a cropped mask at the same position as the first target mask on the foreground mask, and calculating an intersection over union of the cropped mask and the first target mask, to obtain a ratio of overlapping areas of the cropped mask and the first target mask; and
      determining, when the ratio of overlap areas between the cropped mask and the first target mask is greater than a preset overlapping ratio threshold, the target commodity included in the first target mask being in motion, and adding the target commodity in motion into the final target commodity set.
Clause 5. The method according to clause 1, wherein determining the motion direction and the motion distance of the tracked trajectory of each target commodity according to the trajectory tracking data of each target commodity comprises:
   sampling trajectory point set information including at least a starting point and an ending point in the trajectory for each tracked trajectory; and
   inputting the trajectory point set information into a pre-trained trajectory machine learning model, to output the motion direction and the motion distance of the tracked trajectory of each target commodity.
Clause 6. The method according to clause 1, wherein determining the indicative state of whether each target commodity is put in or taken out of the shopping cart, according to the motion direction and the motion distance of the tracked trajectory of each target commodity and the preset commodity motion distance threshold comprises:
   determining, when the motion direction of the target commodity tracked trajectory is from outside the shopping cart into the shopping cart, and the motion distance reaches a preset commodity motion distance threshold, the target commodity being put in the shopping cart; and determining, when the motion direction of the tracked trajectory of the target commodity is from inside the shopping cart to outside the shopping cart, and the motion distance reaches the preset commodity motion distance threshold, the target commodity being taken out of the shopping cart,.
Clause 7. The method according to clause 1, wherein the trajectory tracking data of each target commodity comprises determining the number of commodities according to the number of trajectories; and detecting the abnormal shopping behavior of the user, according to the code scanning data, the trajectory tracking data of each target commodity in the basket area, and the indicative state of whether each target commodity is put in or taken out of the shopping cart comprises:
   acquiring, for the trajectory tracking data of each target commodity in the basket area with the state of being put in the shopping cart, code scanning data within a preset time threshold range before placement time, and within the preset time threshold range, determining, if the number of commodities of the scanning code data is less than the number of commodities put in the shopping cart among the trajectory tracking data of the basket area, a missed scanning behavior by the user;
      or
   determining, for the image data of each target commodity in the state of being taken out of the shopping cart among the trajectory tracking data of the basket area, when it is detected that the number of target commodities taken out of the shopping cart from the basket area within a preset time threshold range is less than the number of commodities deleted on an interaction screen, an over-picking behavior by the user.
Clause 8. The method according to clause 1, wherein detecting the abnormal shopping behavior of the user, according to the code scanning data, the trajectory tracking data of each target commodity in the basket area, and the indicative state of whether each target commodity is put in or taken out of the shopping cart comprises:
   performing commodity recognition on the image data of each target commodity with the state of being put in the shopping cart, among the trajectory tracking data of the basket area, and determining commodity recognition data corresponding to each target commodity; and
   matching each commodity identification information in the code scanning data with each commodity identification information in the commodity recognition data one by one, and determining, when it is detected that the identification information does not corresponded correctly, a wrong scanning behavior by the user.
Clause 9. The method according to clause 1, further comprising:
   acquiring video-frame image data of a code scanning area during the shopping behavior of the user;
   detecting the abnormal shopping behavior of the user, according to the code scanning data, the trajectory tracking data of each target commodity in the basket area, and the indicative state of whether each target commodity is put in or taken out of the shopping cart comprises:
      acquiring image data of each target commodity in the code scanning area in the image of each frame of the video-frame image data of the code scanning area within a preset time threshold range and image data of each target commodity in the basket area;
      calculating a similarity between the image data of each target commodity in the code scanning area and the image data of each target commodity in the basket area; and
      determining, when the similarity is less than a preset commodity similarity threshold, a wrong scanning behavior by the user.
Clause 10. The method according to clause 1, further comprising:
   recording occurrence timing of an action of the user when the occurrence of the action of the user is detected in the basket area;
   intercepting a video-frame image sequence to be detected from the video-frame image data of the basket area, based on the occurrence timing of the action of the user;
   inputting the video-frame image sequence to be detected into a pre-trained action type recognition model to output action type data of the user; and
   detecting the user's shielding behavior and shopping behavior with an abnormal action on the commodity according to the action type data.
Clause 11. The method according to clause 1, further comprising:
   prompting, when determining that the abnormal shopping behavior of the user is a missed scanning behavior, the user to take out the commodity having not been scanned from the shopping cart, and scan the commodity again and then put in the commodity;
   prompting, when determining that the abnormal shopping behavior of the user is a wrong scanning behavior, the user to take out the wrongly put in commodity from the shopping cart, delete a commodity item corresponding to the wrongly put in commodity from an interaction screen, and scan the commodity again and then put in the commodity;
   forbidding, when determining that the abnormal shopping behavior of the user is an over-picking behavior, the user to delete the corresponding commodity item;
   prompting, when determining that the abnormal shopping behavior of the user is a shielding behavior, the user not to shield, and allowing the user to continue to shop after being recovered; and
   prompting, when determining that the abnormal shopping behavior of the user is a shopping behavior with an abnormal action on the commodity, an abnormal action on the commodity by the user.
Clause 12. An abnormal shopping behavior detection apparatus for an intelligent shopping cart, comprising:
   an acquisition unit configured to acquire code scanning data of commodities and video-frame image data of a basket area during a shopping behavior of a user;
   a segmentation processing unit configured to segment the commodities in an image of each frame in the video-frame image data of the basket area, to obtain image data of each target commodity in the basket area in the image of each frame;
   a trajectory tracking unit configured to track a trajectory of each target commodity according to the image data of each target commodity in the basket area among images of a plurality of frames, to obtain trajectory tracking data of each target commodity;
   a trajectory processing unit configured to determine a motion direction and a motion distance of the tracked trajectory of each target commodity according to the trajectory tracking data of each target commodity;
   a state determination unit configured to determine an indicative state of whether each target commodity is put in or taken out of the shopping cart, according to the motion direction and the motion distance of the tracked trajectory of each target commodity and a preset commodity motion distance threshold; and
   a detection unit configured to detect an abnormal shopping behavior of the user, according to the code scanning data, the trajectory tracking data of each target commodity in the basket area, and the indicative state of whether each target commodity is put in or taken out of the shopping cart.
Clause 13. An intelligent shopping cart, comprising:
   a code scanner configured to acquire code scanning data of a commodity during a shopping behavior of a user;
   a basket area collection device configured to collect video-frame image data of a basket area; and
   the abnormal shopping behavior detection apparatus for the intelligent shopping cart according to clause 12.
Clause 14. A computer device, comprising a memory, a processor and a computer program stored in the memory and executable on the processor, wherein when executing the computer program, the processor implements the method according to any one of clause 1 to 11.
Clause 15. A computer-readable storage medium, storing a computer program, wherein when executed by a processor, the computer program implements the method according to any one of clauses 1 to 11.

### BRIEF DESCRIPTION OF THE DRAWINGS

In order to more clearly explain the technical solutions in the embodiments of the present disclosure or in the prior art, the drawings to be used in the description of the embodiments or the prior art will be briefly introduced as follows. Obviously, the drawings used in the following description only illustrate some embodiments of the present disclosure, and those of ordinary skill in the art can obtain other drawings from them without paying any inventive effort. In the drawings:
FIG. 1 illustrates a flowchart of an abnormal shopping behavior detection method for an intelligent shopping cart according to an embodiment of the present disclosure;
FIG. 2 illustrates a structural diagram of an abnormal shopping behavior detection apparatus for an intelligent shopping cart according to an embodiment of the present disclosure;
FIG. 3 illustrates a schematic diagram of a connection structure of an intelligent shopping cart according to an embodiment of the present disclosure;
FIG. 4 illustrates a schematic diagram of a connection structure of an intelligent shopping cart according to another embodiment of the present disclosure; and
FIG. 5 is a structural diagram of an intelligent shopping cart according to an embodiment of the present disclosure.

### DESCRIPTION OF THE EMBODIMENTS

In order that the objectives, technical solutions and advantages of the embodiments of the present disclosure are clearer, the embodiments of the present disclosure will be further illustrated in detail below with reference to the drawings. Here, the exemplary embodiments of the present disclosure and the description thereof are used to illustrate the present disclosure, but are not intended to limit the present disclosure.

The acquisition, storage, use, processing, etc. of data in the technical solutions of the present disclosure comply with the relevant provisions of laws and regulations.

The embodiments of the present disclosure provide an abnormal shopping behavior solution for an intelligent shopping cart, which detects an abnormal shopping behavior based on intelligent hardware. The whole hardware device may be flexibly mounted and detached from the shopping cart, including a code scanner, a calculation and interaction device, a visual camera, a battery module, etc., which are integrated therein. On the basis of the shopping procedures of self-service code scanning, page interaction (user interaction) and self-checkout, it focuses on discovering and preventing some potential abnormal shopping behaviors, such as putting in a commodity without code scanning, putting in commodity B while commodity A is scanned, or interfering with the sensor to put in a commodity. The abnormal shopping behavior solution for the intelligent shopping cart is introduced in detail below.

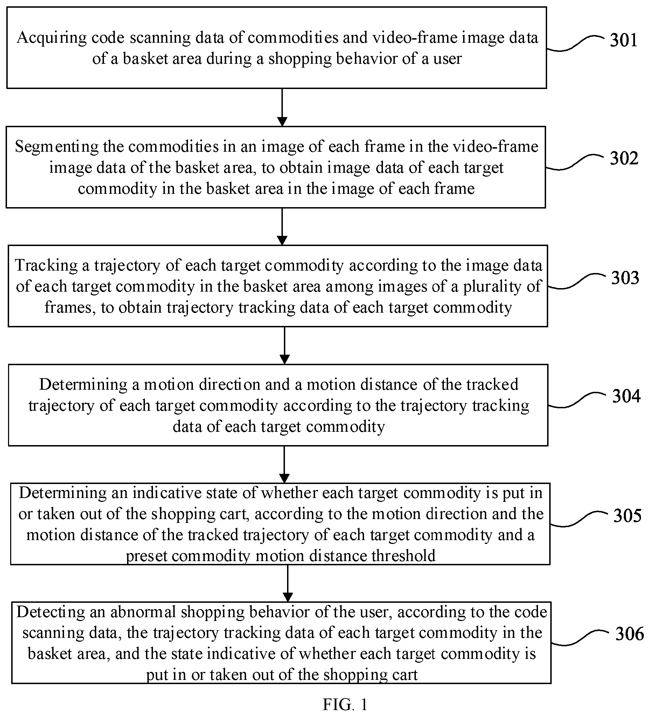

FIG. 1 illustrates a flowchart of an abnormal shopping behavior detection method for an intelligent shopping cart according to an embodiment of the present disclosure. As illustrated in FIG. 1, the method includes:
Step 301: acquiring code scanning data of commodities and video-frame image data of a basket area during a shopping behavior of a user;
Step 302: segmenting the commodities in an image of each frame in the video-frame image data of the basket area, to obtain image data of each target commodity in the basket area in the image of each frame;
Step 303: tracking a trajectory of each target commodity according to the image data of each target commodity in the basket area among images of a plurality of frames, to obtain trajectory tracking data of each target commodity;
Step 304: determining a motion direction and a motion distance of the tracked trajectory of each target commodity according to the trajectory tracking data of each target commodity;
Step 305: determining an indicative state of whether each target commodity is put in or taken out of the shopping cart, according to the motion direction and the motion distance of the tracked trajectory of each target commodity and a preset commodity motion distance threshold; and
Step 306: detecting an abnormal shopping behavior of the user, according to the code scanning data, the trajectory tracking data of each target commodity in the basket area, and the indicative state of whether each target commodity is put in or taken out of the shopping cart.

In the embodiments of the present disclosure, during working, the abnormal shopping behavior detection method for the intelligent shopping cart includes: acquiring code scanning data of commodities and video-frame image data of a basket area during a shopping behavior of a user; segmenting the commodities in an image of each frame in the video-frame image data of the basket area, to obtain image data of each target commodity in the basket area in the image of each frame; tracking a trajectory of each target commodity according to the image data of each target commodity in the basket area among images of a plurality of frames, to obtain trajectory tracking data of each target commodity; determining a motion direction and a motion distance of the tracked trajectory of each target commodity according to the trajectory tracking data of each target commodity; determining an indicative state of whether each target commodity is put in or taken out of the shopping cart, according to the motion direction and the motion distance of the tracked trajectory of each target commodity and a preset commodity motion distance threshold; and detecting an abnormal shopping behavior of the user, according to the code scanning data, the trajectory tracking data of each target commodity in the basket area, and the indicative state of whether each target commodity is put in or taken out of the shopping cart.

According to the embodiment of the present disclosure, the intelligent shopping cart has the function of abnormal shopping behavior detection in addition to the functions of self-service checkout, intelligent shopping and the like, so that the abnormal shopping behavior of the user can be detected by combining the code scanning data and the collected video-frame image data of the basket area. The abnormal shopping behavior detection method for the intelligent shopping cart according to the embodiment of the present disclosure has the following advantageous technical effects:
Firstly, the embodiment of the present disclosure segments the commodities in the image of each frame in video-frame image data in a basket area, and tracks a trajectory of a target commodity, thereby avoiding the problem that the detection result is affected since the commodities are mutually stacked and shielded, and improving the accuracy of the abnormal shopping behavior detection for the intelligent shopping cart.

Secondly, the embodiment of the present disclosure determines a motion direction and a motion distance of each target commodity according to trajectory tracking data of each target commodity; accurately determines an indicative state of whether each target commodity is put in or taken out of the shopping cart according to the direction and the distance, and then accurately detects an abnormal shopping behavior of the user according to the state.

To sum up, the embodiment of the present disclosure can accurately detect the abnormal shopping behavior for the intelligent shopping cart.

The abnormal shopping behavior detection method for the intelligent shopping cart according to the embodiment of the present disclosure will be described in detail below.

In order to facilitate the understanding of the implementation of the present disclosure, firstly, the overall architecture of the intelligent shopping cart mentioned in the embodiment of the present disclosure is introduced.

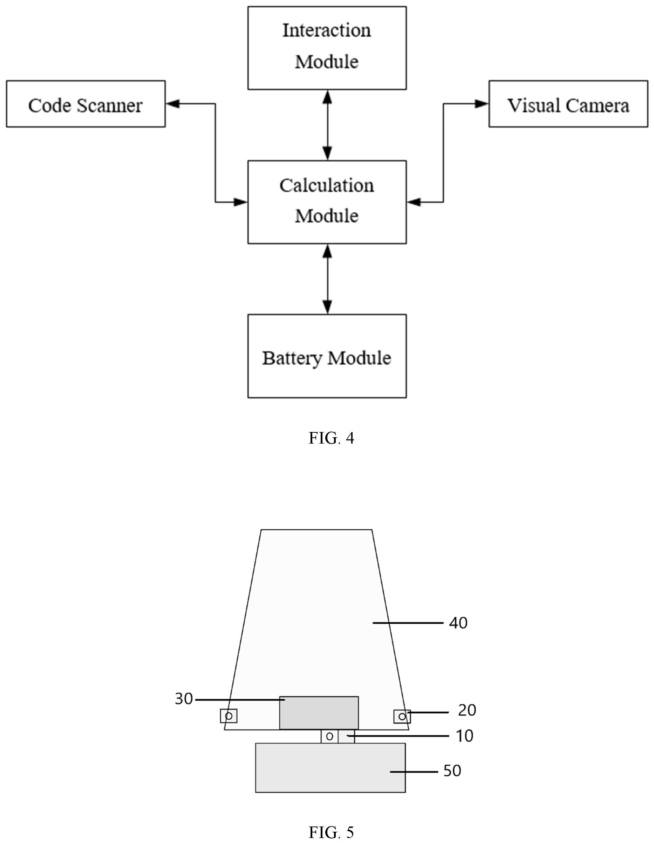

As illustrated in FIGS. 4 and 5, the embodiments of the present disclosure provide an integrated hardware device that can be flexibly mounted and detached. The necessary hardware of an intelligent shopping cart, such as a code scanner 10 in FIG. 5, a calculation and interaction device (including a calculation module and an interaction module in FIG. 4) 30, and a battery module in FIG. 4 are included, and on this basis, a plurality of visual cameras 20 (collection devices) are added to capture video-frame images of a shopping behavior process of a shopper. The run software (that is: the abnormal shopping behavior detection method for the intelligent shopping cart according to the embodiments of the present disclosure, and the method be implemented by a calculation module in FIG. 4, which is an abnormal shopping behavior detection apparatus for the intelligent shopping cart) combines the data of the code scanner and the collected image data to analyze whether the shopping process is normal and whether there are some potential abnormal shopping behaviors, and presents the generated relevant prompt information on an interaction device (e.g., the interaction module in FIG. 4). Specifically:
1. The code scanner may be a conventional code scanning gun or code scanner which is capable of scanning and recognizing a barcode on a commodity, being connected with the interaction device, and sending a recognition result (commodity identification, such as a commodity name, barcode information, commodity price information, code scanning moment, etc.) to the calculation and interaction device.
2. As illustrated in FIG. 5, the visual camera includes one or more RGB (Red, Green, Blue) cameras; and the visual camera is mounted above a periphery of a shopping cart basket and above a periphery of a code scanning area, and connected to the calculation and interaction device for data transmission. In this embodiment, the coverage area of the visual cameras is classified into two types: the camera (basket area collection device) mounted above the periphery of the shopping cart basket has a visual range set as a basket area 40; and the camera (code scanning area collection device) mounted above the periphery of the code scanner has a visual range set as a code scanning area 50.
3. The calculation and interaction device is an electronic device with a touch screen, which is a computing and processing unit with certain computility (e.g., the calculation unit in FIG. 4), mountable on a handle of the shopping cart and connectable to the code scanner and the visual camera. The operating system and software may be run on it to present the data on the interaction screen (the "interaction module" in FIG. 4), so as to realize the basic functions such as self-service code scanning, page interaction and self-service checkout. The data transmitted by the code scanner and the visual camera may be processed by it, and the data or the result may be presented on the interaction screen, so as to discover and prevent some potential abnormal shopping behaviors.
4. The battery module supplies power to the whole device. The battery module may be charged when the whole device is detached from the shopping cart.

Next, the abnormal shopping behavior detection method for the intelligent shopping cart according to the embodiments of the present disclosure will be described in detail with reference to FIGS. 4 and 5.

### I. Acquisition of video-frame images of a shopping process

At the beginning of shopping, the visual camera is started to acquire the video-frame images of the shopping process.

### II. Reasoning operation on the image data.

The calculation module in FIG. 4 processes received image data of each frame using a computer vision algorithm, a machine learning algorithm, a deep learning algorithm, etc. according to the received image data.
1. For the code scanning area, detecting and recording the commodity at a moment of code scanning.

At a moment when a barcode is scanned by the code scanner, the commodity in the code scanning area is detected, and the commodity image data, i.e., the video-frame image data of the code scanning area, is saved (the image data may be used in the following step of judging a wrong scanning behavior). As shown in the above step 301, this step acquires the code scanning data of the commodity during the shopping behavior of the user by the scanner.

2. For the basket area, judging whether the target commodity is put in or taken out of the shopping cart, i.e., performing steps 302 to 305.

If the RGB camera is configured, it is judged whether the target commodity is put in or taken out of the shopping cart according to the trajectory of the target commodity, based on a target tracking algorithm. The specific detailed steps are as follows:

### 1) Target detection or segmentation of commodities.

For the video-frame image data, commodities in the image are detected or segmented using target detection algorithm model or image segmentation algorithm model, so as to output a target bounding box B1 (first target bounding box) or a target mask A1 (first target mask), which includes the commodity. In this embodiment, the target detection algorithm model and the segmentation algorithm model are models trained by the deep learning algorithm with training data, including but not limited to a convolutional neural network model or a transformer network model. The target detection algorithm model uses algorithms including but not limited to those of one stage or two stages, such as SSD (Single Shot MultiBox Detector) and yolo series algorithms, and the segmentation algorithm model includes but is not limited to yolact, solo, yolo, segmentation anything models, etc.

During implementation, the target bounding box may be a rectangular bounding box, which can completely include one target commodity, and the mask of the commodity is a pixel block that can surround the target commodity. As for when to use the target bounding box and when to use the mask, it depends on the algorithm model for commodity detection. If the target detection model is adopted, the target bounding box is used, and if the segmentation model is adopted, the mask is used.

### 2) Screening and filtering of the target commodities.

Different screening and filtering of different levels are carried out for the target commodities, including the following two items:

### A. Filtering of an interferent (interference) detected by mistake

In order to avoid the influence on the subsequent judgment caused by the false detection or false segmentation of any non-commodity target by the algorithm model in step 1), it is necessary to check and filter the detected or segmented target commodities. The specific method is as follows:

Firstly, the interfering target are detected or segmented. For the video-frame image data, target detection or image segmentation algorithm model is used to detect or segment an interferent (e.g., hand, arm, mobile phone, etc.) in the image, so as to output a target bounding box B2 (second target bounding box) or a target mask A2 (second target mask, which is a mask of the interferent and a pixel block being capable of surrounding the interferent), which includes the interferent. Either the mask of the interferent or the target bounding box can completely include a target interferent.

Next, the commodity is checked. The target detection bounding box B1 of the commodity or the target mask A1 of the commodity in step 1) is used to calculate an intersection over union with the target detection bounding box B2 of the interferent or the target mask A2 of the interferent, i.e., a ratio "a" of overlapping areas of two targets. If the ratio "a" of overlapping areas is greater than a preset threshold, the target detection bounding box B1 or the target mask A1 at this time is considered as an interferent and should be eliminated, otherwise, the target detection bounding box B1 or the target mask A1 at this time is considered as a real commodity and recorded in a commodity set S (which records the bounding box information of each commodity or the mask information of each commodity and the image information of each commodity).

During implementation, in step 302, the commodities in the image of each frame of the video-frame image data of the basket area are segmented, to obtain position information and image data of each target commodity in the basket area in the image of each frame. In step 303, the trajectory of each target commodity is tracked according to the position information and the image data of each target commodity in the basket area in the image of a plurality of frames, to obtain trajectory tracking data of each target commodity.

As can be seen from the above, in one embodiment, if a collection device of the video-frame image data of the basket area is an RGB camera, segmenting the commodities in the image of each frame in the video-frame image data of the basket area, to obtain image data of each target commodity in the basket area in the image of each frame includes:
segmenting the commodities in the image of each frame in the video-frame image data of the basket area, to output first target masks including each target commodity, and forming a target commodity set according to each target commodity, the corresponding first target masks and image information;
segmenting the interferents in the image of each frame in the video-frame image data of the basket area, to output a second target mask including a target interferent;
calculating an intersection over union of the first target mask of the target commodity and the second target mask of the target interferent, to obtain a ratio of overlapping areas of the first target mask and the second target mask; and
eliminating, when the ratio of overlapping areas of the first target mask and the second target mask is greater than a preset overlapping ratio threshold, the target commodity included in the first target mask as the interferent from the target commodity set.

During implementation, by calculating the intersection over union of the target mask of the commodity and the target mask of the interferent, the segmented and detected commodities are filtered, so as to avoid the influence on the judgment of the subsequent abnormal shopping behavior caused by the false segmentation of the interferents, and improve the detection accuracy of the subsequent abnormal shopping behavior.

As can be seen from the above, in one embodiment, if the collection device of the video-frame image data of the basket area is an RGB camera, the commodities in the image of each frame of the video-frame image data of the basket area are subject to target detection, to obtain the position information and the image data of each target commodity in the basket area in the image of each frame, which may further include:
performing target detection of the commodities in the image of each frame of the video-frame image data of the basket area, so as to output first target bounding boxes including each target commodity, and forming a target commodity set according to each target commodity, the corresponding first target bounding boxes and the image information;
performing target detection of the interferents in the image of each frame of the video-frame image data of the basket area, to output a second target bounding box including a target interferent;
calculating an intersection over union of the first target bounding box of the target commodity and the second target bounding box of the target interferent, to obtain a ratio of overlapping areas of the first target bounding box and the second target bounding box; and
eliminating, when the ratio of overlapping areas of the first target bounding box and the second target bounding box is greater than a preset overlapping ratio threshold, the target commodity included in the first target bounding box as an interferents from the target commodity set.

During implementation, by calculating the intersection over union of the target mask of the commodity and the target masks of the interferent, the commodities after the target detection are filtered, so as to avoid the influence on the judgment of the subsequent abnormal shopping behavior caused by the false target detection of the interferents, and improve the detection accuracy of the subsequent abnormal shopping behavior.

As can be seen from the above, in one embodiment, the abnormal shopping behavior detection method for the intelligent shopping cart further includes: determining that the commodity included in the first target mask is a real commodity and remain the commodity in the target commodity set, when the ratio of overlapping areas is less than the preset overlapping ratio threshold.

### B. filtering out a commodity in motion

In order to more accurately track the commodity put in or taken out of the shopping chart and calculate the trajectory thereof, the embodiments of the present disclosure provide a method for screening out a commodity in motion.

As can be seen from the above, in one embodiment, the abnormal shopping behavior detection method for the intelligent shopping cart further includes:
filtering out a target commodity in motion from the target commodity set and adding the target commodity in motion into a final target commodity set, and the image data of each target commodity in the basket area among the images of the plurality of frames is commodity data taken from the final target commodity set.

The specific method for screening out the commodity in motion is as follows:
using algorithms to calibrate, screen and filter the commodity in motion, which specifically includes:

### A). Calibrating pixels in motion in the image

For the video frame data, a foreground extraction algorithm or a background subtraction algorithm is adopted to calibrate an area of motion targets, and extracts a binary image mask A3 corresponding to the calibrated area as a foreground mask A3 of the image of each frame. In the embodiment, the foreground extraction algorithm includes, but is not limited to the background subtraction method of a gaussian Mixture model, a frame difference method, an optical flow method, a KNN (K-Nearest Neighbors) algorithm, etc.

### b) Selecting the motion target

The target mask A1 is used, and a mask A1' at the same position as A1 is cropped (cropped mask) on the mask A3 (binary image mask) to calculate an intersection over union of A1' and A1, i.e., a ratio "a" of overlapping areas of the two masks. If the ratio "a" of overlapping areas is greater than the preset threshold, the commodity corresponding to the mask A1 is considered as in motion and incorporated into the commodity set S (which records the bounding box information of each commodity or the mask information of each commodity and the image information of each commodity).

As can be seen from the above, in one embodiment, filtering out the target commodity in motion from the target commodity set and adding the target commodity in motion into the final target commodity set includes:
calibrating an area of motion pixels in the image of each frame in the target commodity set, and extracting a binary image mask corresponding to the calibrated area as a foreground mask of the image of each frame;
cropping a cropped mask at the same position as the first target mask on the foreground mask, and calculating an intersection over union of the cropped mask and the first target mask, to obtain a ratio of overlapping areas of the cropped mask and the first target mask; and
determining, when the ratio of overlap areas between the cropped mask and the first target mask is greater than a preset overlapping ratio threshold, the target commodity included in the first target mask being in motion, and adding the target commodity in motion into the final target commodity set.

So far, step 1) performs target detection or segmentation of commodities, and step 2) introduces the screening and filtering of the target commodities in step 302 and the exemplary solution thereof. It is more practical to adopt a machine learning method or a deep learning method to detect, segment and track the commodities in actual application scenarios, which can record and analyze the process in which the commodities are put in or taken out of the shopping cart, and count the number of the commodities put in or taken out, thereby avoiding the situation that the commodities are mutually stacked and shielded in the judgment time difference and the specific number of the commodities put in or taken out of the shopping cart cannot be discovered.

3) Tracking the target commodity and recording the trajectory, i.e., the above step 303.

For the commodities in the commodity set S, the information of each commodity is used to track the trajectory of the commodity. The methods used include, but are not limited to, the following:

### A. Tracking using a multi-target tracking algorithm

For each target commodity in the commodity set S, information of the target bounding box or description data of the key point is taken as input data of multi-target tracking to finally output information of the target tracked trajectory. The target tracking used is a conventional multi-target tracking algorithm, including:
a) performing Kalman filtering prediction on each target trajectory, and calculating and predicting a motion mode and state (speed, direction, acceleration and trajectory) of a target;
b) describing characteristics of the target, including appearance characteristics thereof;
c) performing data association matching on predicted data and characteristic description data using a Hungarian algorithm.

### B. Using a reid algorithm for tracking calculation.

The target commodities are extracted as the characteristic description data, and the characteristic description data of the target commodities in respective frames is compared to determine similarities therebetween, and the characteristic description data with a similarity within a threshold range is matched as a trajectory id (identification) of the same target.

### C. Using a visual tracking algorithm

A model trained with training data using a deep learning method is adopted. The algorithm model can process the information of target bounding box or description data of the key point and time sequence information, and directly output the information of target tracked trajectory.

In this embodiment, a different trajectory id is assigned to each commodity in the commodity set S, and the number of commodities put in or taken out of the shopping cart can be determined according to the number of ids.

4) calculating the trajectory of the target commodity, i.e., the above step 304.
calculating a motion direction and a motion distance for each tracked trajectory. The specific method is as follows:
sampling trajectory point set information including at least a starting point and an ending point in the trajectory for each tracked trajectory, and inputting the trajectory point set information into a machine learning model, to output information such as the motion direction and a longest motion distance.

In this embodiment, the machine learning model includes but is not limited to an XGboost regression model. After being trained, the machine learning model receives the input trajectory point set information and may output information such as the motion direction and a motion difference.

As can be seen from the above, in one embodiment, determining the motion direction and the motion distance of the tracked trajectory of each target commodity according to the trajectory tracking data of each target commodity includes:
sampling trajectory point set information including at least a starting point and an ending point in the trajectory for each tracked trajectory; and
inputting the trajectory point set information into a pre-trained trajectory machine learning model, to output the motion direction of the tracked trajectory of each target commodity and the motion distance of the tracked trajectory of each target commodity.

During implementation, by determining the motion direction and the motion distance of the tracked trajectory of each target commodity, the embodiment can improve the efficiency and accuracy of the trajectory calculation, and further improve the accuracy and efficiency of the abnormal shopping behavior detection.

5) Judging an indicative state of whether the target commodity is put in or taken out of the shopping cart, i.e., the above step 305.

Based on the direction and distance of the target trajectory, if the trajectory of a commodity is from outside the shopping cart into the shopping cart and the motion distance reaches a threshold, it is determined that the commodity is put in the shopping cart; and if the trajectory of a commodity is from inside the shopping cart to outside the shopping cart and the motion distance reaches a threshold (preset commodity motion distance threshold), it is determined that the commodity is taken out of the shopping cart.

As can be seen from the above, in one embodiment, determining the indicative state of whether each target commodity is put in or taken out of the shopping cart, according to the motion direction and the motion distance of the tracked trajectory of each target commodity and a preset commodity motion distance threshold includes:
determining, when the motion direction of the target commodity tracked trajectory is from outside the shopping cart into the shopping cart, and the motion distance reaches a preset commodity motion distance threshold, the target commodity being put in the shopping cart; and determining, when the motion direction of the tracked trajectory of the target commodity is from inside the shopping cart to outside the shopping cart, and the motion distance reaches the preset commodity motion distance threshold, the target commodity being taken out of the shopping cart.

III. A loss prevention logic module performs data processing, i.e., the above step 306.

### 1. Receiving and summarizing all the data

The logic processing module receives detection tracking data output from an image processing module, code scanning data of the code scanner, and an operation instruction of an interaction interface (e.g., an instruction of commodity item deletion or member log-in);

### 2. Judging abnormal behaviors according to the fused data

### 1) Aligning the time of code scanning data and the number of code scanning, and judging a missed scanning behavior

For the commodity put in the basket area, the tracking data is detected, and the code scanning data within a threshold time t before a moment of putting in (placement time) is collected. Within the threshold time range, if n new commodities in the detection and recognition data of the basket area (as mentioned above, the number of the commodities is determined according to the number of the tracked trajectories of the commodities) are put in the shopping cart, while the number of the newly received scanning code data is less than n, it is determined that there is a "missed scanning behavior" at this time.

In one embodiment, the trajectory tracking data of each target commodity includes: determining the number of commodities according to the number of trajectories; detecting the abnormal shopping behavior of the user, according to the code scanning data, the trajectory tracking data of each target commodity in the basket area, and the indicative state of whether each target commodity is put in or taken out of the shopping cart includes:
acquiring, for the trajectory tracking data of each target commodity in the basket area with the state of being put in the shopping cart, code scanning data within a preset time threshold range before placement time, and within the preset time threshold range, determining, if the number of commodities of the scanning code data is less than the number of commodities put in the shopping cart among the trajectory tracking data of the basket area, a missed scanning behavior by the user.

### 2) Judging a wrong scanning behavior

### A. Recognizing the commodities put in

Each of n commodities put in among the detection tracking data of the basket area is recognized, so as to determine a commodity identifier, such as a commodity name or barcode information, which is corresponding to each commodity.

In this embodiment, the method of commodity recognition includes but is not limited to: using a deep learning algorithm model for classification recognition, using a retrieval calculation method for retrieval recognition, and outputting a result with a highest confidence as an recognition result.

### B. Comparing the code scanning results with the commodity recognition results

During implementation, there may be two ways to judge the wrong scanning behavior:
Implementation 1: matching the recognition results of the n commodities put in with n pieces of code scanning data; if the results of matching are consistent, the code scanning data is cancelled with the recognition data one by one (the code scanning data can be in one-to-one correspondence with the commodity information corresponding to the recognition data); if the n pieces of code scanning data are cancelled with n pieces of recognition data one by one, a "normal behavior" is determined; and if it is finally discovered that there is any commodity recognition data that cannot be cancelled, a "wrong scanning behavior" is determined to be existed at this time.

As can be seen from the above, in one embodiment, detecting the abnormal shopping behavior of the user, according to the code scanning data, the trajectory tracking data of each target commodity in the basket area, and the indicative state of whether each target commodity is put in or taken out of the shopping cart includes:
performing commodity recognition on the image data of each target commodity with the state of being put in the shopping cart, among the trajectory tracking data of the basket area, and determining commodity recognition data corresponding to each target commodity;
matching each commodity identification information in the code scanning data with each commodity identification information in the commodity recognition data one by one, and determining, when it is detected that the identification information does not corresponded correctly, a wrong scanning behavior by the user.

During implementation, based on a process of putting in or taking out the commodities and the number of the commodities, and in combination with the code scanning data of the code scanner and the result data of commodity recognition, the wrong scanning behavior can be determined more accurately. For example, when the code scanning and the putting in the commodity are out of order, the logical method of one-to-one cancellation can show a better judgment result and a friendlier experience.

Implementation 2: in addition to judging the wrong scanning behavior using the method of commodity recognition, the detected commodity image in the code scanning area may also be used. The specific method is as follows: within a time range t, the image data of the commodity in the detection and identification data of the code scanning area is acquired, and meanwhile, the image of the commodity put in the shopping cart captured in the basket area is acquired, so as to calculate a similarity of the commodity images acquired in two different areas, including but not limited to comparisons of: a similarity of commodity appearance characteristics, a color similarity, a texture similarity, a size difference, etc. If there is a large difference therebetween, a "wrong scanning behavior" is determined at this time.

As can be seen from the above, in one embodiment, the abnormal shopping behavior detection method of the intelligent shopping cart further includes: acquiring video-frame image data of the code scanning area during the shopping behavior of the user;
detecting the abnormal shopping behavior of the user, according to the code scanning data, the trajectory tracking data of each target commodity in the basket area, and the indicative state of whether each target commodity is put in or taken out of the shopping cart includes:
acquiring image data of each target commodity in the code scanning area in the image of each frame of the video-frame image data of the code scanning area within a preset time threshold range and image data of each target commodity in the basket area;
calculating a similarity between the image data of each target commodity in the code scanning area and the image data of each target commodity in the basket area; and
determining, when the similarity is less than a preset commodity similarity threshold, a wrong scanning behavior by the user.

### 3) Judging an over-picking behavior

If the shopping cart deletes n (the number of commodities deleted from the interaction screen) commodities from the interaction screen within the threshold time range, but the number of commodities taken out of the shopping chart, which are included in the detection and identification data of the basket, is less than n, a "over-picking behavior" is determined.

As can be seen from the above, in one embodiment, the trajectory tracking data of each target commodity includes determining the number of commodities according to the number of trajectories; detecting the abnormal shopping behavior of the user, according to the code scanning data, the trajectory tracking data of each target commodity in the basket area, and the indicative state of whether each target commodity is put in or taken out of the shopping cart includes:
determining, for the image data of each target commodity in the state of being taken out of the shopping cart among the trajectory tracking data of the basket area, when it is detected that the number of target commodities taken out of the shopping cart from the basket area within a preset time threshold range is less than the number of commodities deleted on an interaction screen, an over-picking behavior by the user.

IV. The further exemplary solutions of the embodiments of the present disclosure will be introduced below.
1. Firstly, it is introduced the judgement of a shielding behavior and an abnormal action behavior of the user through the recognition of an action of the shopper according to an action type recognition result.

Discovering and determining the occurrence of an action in the basket area.
1) When it is detected that an action of the user occurs in the basket area, starting timing t1 of the action and ending timing t2 of the action are recorded;
2) sampling the video-frame image
   the video-frame image data is truncated based on the determined starting timing of the action;
3) recognizing the action
   an intercepted video-frame image sequence is input into a machine learning algorithm model or a deep algorithm model, to output an action recognition result of the shopper, and the action includes putting in the commodity, taking out the commodity, sorting the commodity, dangling or the like, and most importantly, it should be confirmed that the shopper puts in or takes out the commodity;
   the action is recognized for the basket area, and the method is specially but not limited to: for the video-frame image sequence of the whole process, a machine learning algorithm or a deep algorithm model is adopted to recognize the action of the shopper, to discover the abnormal action (action type data) of the shopper, such as stacking and shielding the commodities, replacing a commodity package, switching a commodity barcode, shielding a visual sensor, or the like.

During implementation, in addition to the determination of abnormal shopping behaviors such as the missed scanning behavior, the wrong scanning behavior and the over-picking behavior, it is also possible to detect the abnormal shopping behaviors according to the action recognition result.

During implementation, if the visual image of the basket area is abnormal, the image processing module infers that the camera is shielded by a commodity which is intentionally shielded or stacked high, and a "shielding behavior" is determined at this time to prevent the shopper from putting in the commodity under the condition that the camera is shielded. If there is any abnormal action in the action identification data of the basket area, such as stacking and shielding the commodity, changing the commodity package, etc., a "shopping behavior with an abnormal action on the commodity" is determined.

As can be seen from the above, in one embodiment, the method further includes:
recording occurrence timing of an action of the user when the occurrence of the action of the user is detected in the basket area;
intercepting a video-frame image sequence to be detected from the video-frame image data of the basket area, based on the occurrence timing of the action of the user;
inputting the video-frame image sequence to be detected into a pre-trained action type recognition model to output action type data of the user; and
detecting the user's shielding behavior and shopping behavior with an abnormal action on the commodity (e.g., stacking and shielding the commodity, replacing the commodity package, switching the commodity barcode, shielding the visual sensor, etc.), according to the action type data.

2. Secondly, it is introduced a solution of reporting and prompting the detected abnormal shopping behavior
1) If there is a "missed scanning behavior", the shopper is prompted to take out the commodity having not been scanned, scan the commodity again and then put in the commodity.
2) If there is "wrong scanning behavior", the shopper is prompted to take out the commodity put in by mistake, delete the original commodity item from the interaction screen, scan the commodity again and then put in the commodity.
3) If there is an "over-picking behavior", the shopper is prompted or forbidden to delete more commodity items.
4) If there is a "shielding behavior", the shopper is prompted not to shield, and it is allowed to continue the shopping after being recovered.
5) If there is a "shopping behavior with an abnormal action on the commodity", it is promoted that there is an abnormal shopping behavior, which is a shopping behavior with an abnormal action on the commodity.

As can be seen from the above, in one embodiment, the abnormal shopping behavior detection method for the intelligent shopping cart further includes:
prompting, when determining that the abnormal shopping behavior of the user is a missed scanning behavior, the user to take out the commodity having not been scanned from the shopping cart, and scan the commodity again and then put in the commodity;
prompting, when determining that the abnormal shopping behavior of the user is a wrong scanning behavior, the user to take out the wrongly put in commodity from the shopping cart, delete a commodity item corresponding to the wrongly put in commodity from an interaction screen, and scan the commodity again and then put in the commodity;
forbidding, when determining that the abnormal shopping behavior of the user is an over-picking behavior, the user to delete the corresponding commodity item;
prompting, when determining that the abnormal shopping behavior of the user is a shielding behavior, the user not to shield, and allowing the user to continue to shop after being is recovered; and
prompting, when determining that the abnormal shopping behavior of the user is a shopping behavior with an abnormal action on the commodity, an abnormal action on the commodity by the user.

During implementation, the solution of reporting and prompting the detected abnormal shopping behavior automatically prompts the irregular behavior of the shopper in time, allows the shopper to make a correction, reduces the manual intervention in the supermarket and improves the user's experience.

3. Next, it is introduced a solution of entering a payment procedure and checking a shopping list.

If the shopper clicks an interaction button and attempts to enter a payment procedure, it is checked whether there is still any abnormal behavior not eliminated in a shopping list:
1) If yes, promoting the shopper to correct the behavior.
2) If not, proceeding to the payment procedure.

During implementation, the solution of entering the payment procedure and checking the shopping list ensures the smooth and safe shopping with the shopping cart.

The abnormal shopping behavior method for the intelligent shopping cart according to the embodiment of the present disclosure has the following advantages:
1) An integrated hardware device is provided, which can be flexibly mounted on and detached from the shopping cart, to achieve the function of detecting the abnormal shopping behavior of the user, in addition to functions of self-service checkout, intelligent shopping, etc. In particular, based on the hardware of the conventional intelligent shopping cart, several visual cameras (especially cameras in the code scanning area) are added to cover the basket area of the shopping cart or the code scanning area, to capture the shopping behavior of the shopper. There is provided software executable on the integrated device. The software can combine the data of the code scanner and the collected image data to analyze whether the shopping process is normal and whether there are some potential theft behaviors, and display prompt information on the interaction device.
2) It is more practical to adopt a machine learning method or a deep learning method to detect, segment and track the commodities or recognize the actions in actual application scenarios, which can record and analyze the process in which the commodities are put in or taken out of the shopping cart, and count the number of the commodities put in or taken out, thereby avoiding the situation that the commodities are mutually stacked and shielded in the judgment time difference and the specific number of the commodities put in or taken out of the shopping cart cannot be discovered.
3) Based on the process of putting in or taking out the commodities and the number of the commodities, and in combination with the code scanning data of the code scanner and the result data of commodity recognition, the wrong scanning behavior can be judged more accurately. For example, when the code scanning and the putting in the commodity are out of order, the logical method of one-to-one cancellation can show a better judgment result and a friendlier experience.

To sum up, the abnormal shopping behavior method for the intelligent shopping cart according to the embodiments of the present disclosure achieve the following:
1) The ordinary shopping carts are provided with capabilities of self-service checkout and intelligent shopping.
2) The irregular behaviors of the shopper are discovered effectively, and the potential abnormal shopping behaviors are reduced during the self-service shopping.
3) The irregular behaviors of the shopper are prompted automatically and timely, the shopper is allowed to make a correction, and the manual intervention in the supermarket is reduced.
4) The manual checkout at the import and the export of supermarket is reduced, the checkout list of the shopping cart is in self-service, and the operating cost is reduced.

The embodiments of the present disclosure further provide an abnormal shopping behavior detection apparatus for an intelligent shopping cart, as described in the following embodiments. Since the principle of the apparatus to solve the problem is similar to that of the abnormal shopping behavior detection method for the intelligent shopping cart, the implementations of the apparatus may refer to those of the abnormal shopping behavior detection method for the intelligent shopping cart, and the repeated contents are omitted here.

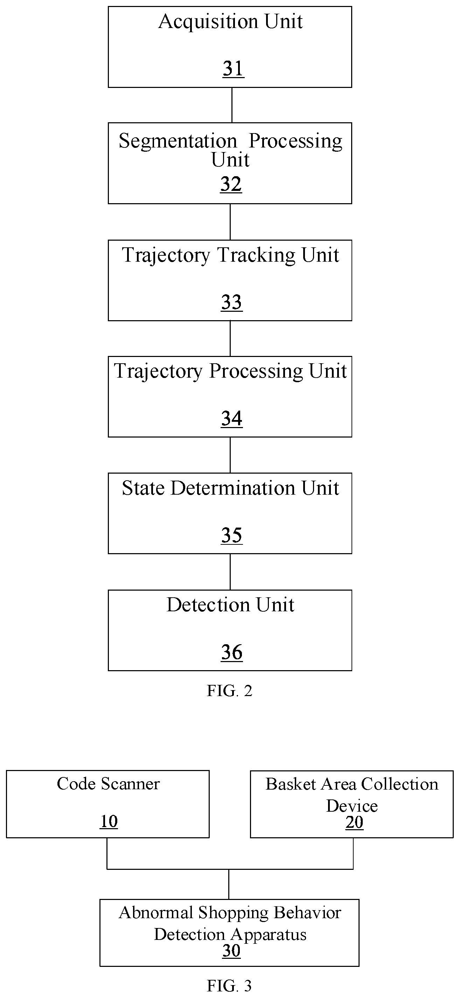

FIG. 2 illustrates a structural diagram of an abnormal shopping behavior detection apparatus for an intelligent shopping cart according to an embodiment of the present disclosure. As illustrated in FIG. 2, the apparatus includes:
an acquisition unit 31 configured to acquire code scanning data of a commodity and video-frame image data of a basket area during a shopping behavior of a user;
a segmentation processing unit 32 configured to segment the commodities in an image of each frame in the video-frame image data of the basket area, to obtain image data of each target commodity in the basket area in the image of each frame;
a trajectory tracking unit 33 configured to track a trajectory of each target commodity according to the image data of each target commodity in the basket area among images of a plurality of frames, to obtain trajectory tracking data of each target commodity;
a trajectory processing unit 34 configured to determine a motion direction and a motion distance of the tracked trajectory of each target commodity according to the trajectory tracking data of each target commodity;
a state determination unit 35 configured to determine an indicative state of whether each target commodity is put in or taken out of the shopping cart, according to the motion direction and the motion distance of the tracked trajectory of each target commodity and a preset commodity motion distance threshold; and
a detection unit 36 configured to detect an abnormal shopping behavior of the user, according to the code scanning data, the trajectory tracking data of each target commodity in the basket area, and the indicative state of whether each target commodity is put in or taken out of the shopping cart.

In one embodiment, if a collection device for the video-frame image data of the basket area is an RGB camera, the segmentation processing unit is specifically configured to:
segment the commodities in the image of each frame in the video-frame image data of the basket area, to output first target masks including each target commodity, and forming a target commodity set according to each target commodity, the corresponding first target masks and image information, and the mask is a pixel block surrounding the commodity;
segment an interferent in the image of each frame in the video-frame image data of the basket area, to output a second target mask including a target interferent;
calculate an intersection over union of the first target mask of the target commodity and the second target mask of the target interferent, to obtain a ratio of overlapping areas of the first target mask and the second target mask; and
eliminating, when the ratio of overlapping areas of the first target mask and the second target mask is greater than a preset overlapping ratio threshold, the target commodity included in the first target mask as the interferent from the target commodity set.

In one embodiment, the segmentation processing unit is further configured to determine that the commodity included in the first target mask is a real commodity and remain the commodity in the target commodity set, when the ratio of overlapping areas is less than the preset overlapping ratio threshold.

In one embodiment, the abnormal shopping behavior detection apparatus further includes:
a screening processing unit configured to filter out a target commodity in motion from the target commodity set and adding the target commodity in motion into a final target commodity set, and the image data of each target commodity in the basket area among images of the the plurality of frames is commodity data taken from the final target commodity set.

In one embodiment, the screening processing unit is specifically configured to:
calibrate an area of motion pixels in the image of each frame in the target commodity set, and extract a binary image mask corresponding to the calibrated area as a foreground mask of the image of each frame;
crop a cropped mask at the same position as the first target mask on the foreground mask, and calculate an intersection over union of the cropped mask and the first target mask, to obtain a ratio of overlapping areas of the cropped mask and the first target mask; and
determine, when the ratio of overlap areas between the cropped mask and the first target mask is greater than a preset overlapping ratio threshold, the target commodity included in the first target mask being in motion, and add the target commodity in motion into the final target commodity set.

In one embodiment, the trajectory processing unit is specifically configured to:
sample trajectory point set information including at least a starting point and an ending point in the trajectory for each tracked trajectory; and
input the trajectory point set information into a pre-trained trajectory machine learning model, to output the motion direction and the motion distance of the tracked trajectory of each target commodity.

In one embodiment, the state determination unit is specifically configured to:
determine, when the motion direction of the target commodity tracked trajectory is from outside the shopping cart into the shopping cart, and the motion distance reaches a preset commodity motion distance threshold, the target commodity being put in the shopping cart; and determine, when the motion direction of the tracked trajectory of the target commodity is from inside the shopping cart to outside the shopping cart, and the motion distance reaches the preset commodity motion distance threshold, the target commodity being taken out of the shopping cart.

In one embodiment, the trajectory tracking data of each target commodity includes: determining the number of commodities according to the number of trajectories; the detection unit is specifically configured to:
acquire, for the trajectory tracking data of each target commodity in the basket area with the state of being put in the shopping cart, code scanning data within a preset time threshold range before placement time, and within the preset time threshold range, determine, if the number of commodities of the scanning code data is less than the number of commodities put in the shopping cart among the trajectory tracking data of the basket area, a missed scanning behavior by the user.

In one embodiment, the detection unit is specifically configured to:
perform commodity recognition on the image data of each target commodity in the state of being put in the shopping cart, among the trajectory tracking data of the basket area, and determine commodity recognition data corresponding to each target commodity; and
match each commodity identification information in the code scanning data with each commodity identification information in the commodity recognition data one by one, and determine, when it is detected that the identification information does not corresponded correctly, a wrong scanning behavior by the user.

In one embodiment, the abnormal shopping behavior detection apparatus for the intelligent shopping cart may further include a code scanning area image acquisition unit configured to acquire the video-frame image data of a code scanning area during the shopping behavior of the user;
the detection unit is specifically configured to:
acquire image data of each target commodity in the code scanning area in the image of each frame of the video-frame image data of the code scanning area within a preset time threshold range and image data of each target commodity in the basket area;
calculate a similarity between the image data of each target commodity in the code scanning area and the image data of each target commodity in the basket area; and
determine, when the similarity is less than a preset commodity similarity threshold, a wrong scanning behavior by the user.

In one embodiment, the trajectory tracking data of each target commodity includes: determining the number of commodities according to the number of trajectories; the detection unit is specifically configured to:
determine, for the image data of each target commodity in the state of being taken out of the shopping cart among the trajectory tracking data of the basket area, when it is detected that the number of target commodities taken out of the shopping cart from the basket area within a preset time threshold range is less than the number of commodities deleted on an interaction screen, an over-picking behavior by the user.

In one embodiment, the abnormal shopping behavior detection apparatus for the intelligent shopping cart further includes:
an action detection unit configured to record occurrence timing of an action of the user when the occurrence of the action of the user is detected in the basket area;
an interception unit configured to intercept a video-frame image sequence to be detected from the video-frame image data of the basket area, based on the occurrence timing of the action of the user;
a recognition unit configured to input the video-frame image sequence to be detected into a pre-trained action type recognition model to output action type data of the user; and
the detection unit further configured to detect the user's shielding behavior and shopping behavior with an abnormal action on the commodity according to the action type data.

In one embodiment, the abnormal shopping behavior detection apparatus further includes a prompt processing unit configured to:
prompt, when determining that the abnormal shopping behavior of the user is a missed scanning behavior, the user to take out the commodity having not been scanned from the shopping cart, scan the commodity again and then put in the commodity;
prompt, when determining that the abnormal shopping behavior of the user is a wrong scanning behavior, the user to take out the wrongly put in commodity from the shopping cart, delete a commodity item corresponding to the wrongly put in commodity from an interaction screen, scan the commodity again and then put in the commodity;
forbid, when determining that the abnormal shopping behavior of the user is an over-picking behavior, the user to delete the corresponding commodity item;
prompt, when determining that the abnormal shopping behavior of the user is a shielding behavior, the user not to shield, and allow the user to continue to shop after being recovered; and
prompt, when determining that the abnormal shopping behavior of the user is a shopping behavior with an abnormal action on the commodity, an abnormal action on the commodity by the user.

The embodiments of the present disclosure further provide an intelligent shopping cart, as described in the following embodiments. Since the principle of the intelligent shopping cart to solve the problem is similar to that of the abnormal shopping behavior detection method for the intelligent shopping cart, the implementations of the intelligent shopping cart may refer to those of the abnormal shopping behavior detection method for the intelligent shopping cart, and the repeated contents are omitted here.

FIG. 3 illustrates a schematic diagram of a connection structure of an intelligent shopping cart according to an embodiment of the present disclosure. As illustrated in FIG. 3, the intelligent shopping cart includes:
a code scanner 10 configured to acquire code scanning data of a commodity during a shopping behavior of a user;
a basket area collection device 20 configured to collect video-frame image data of a basket area; and
an abnormal shopping behavior detection apparatus 30 configured to detect an abnormal shopping behavior of the user.

During implementation, as illustrated in FIGS. 4 and 5, the intelligent shopping cart according to the embodiments of the present disclosure may further include a battery module, a visual camera and other components, as detailed in the above introduction to the overall architecture of the intelligent shopping cart.

The embodiments of the present disclosure further provide a computer device, including a memory, a processor and a computer program stored in the memory and executable on the processor, and when executing the computer program, the processor implements the abnormal shopping behavior detection method for the intelligent shopping cart.

The embodiments of the present disclosure further provide a computer-readable storage medium storing a computer program, and when executed by a processor, the computer program implements the abnormal shopping behavior detection method for the intelligent shopping cart.

The embodiments of the present disclosure further provide a computer program product including a computer program, and when executed by a processor, the computer program implements the abnormal shopping behavior detection method of the intelligent shopping cart.

According to the embodiment of the present disclosure, the intelligent shopping cart has the function of abnormal shopping behavior detection in addition to the functions of self-service checkout, intelligent shopping and the like, so that the abnormal shopping behavior of the user can be detected by combining the code scanning data and the collected video-frame image data of the basket area. The abnormal shopping behavior detection solution for the intelligent shopping cart according to the embodiment of the present disclosure has the following advantageous technical effects:

Firstly, the embodiment of the present disclosure segments the commodities in the image of each frame in video-frame image data in a basket area, and tracks a trajectory of a target commodity, thereby avoiding the problem that the detection result is affected since the commodities are mutually stacked and shielded, and improving the accuracy of the abnormal shopping behavior detection for the intelligent shopping cart.

Secondly, the embodiment of the present disclosure determines a motion direction and a motion distance of each target commodity according to trajectory tracking data of each target commodity; accurately determines an indicative state of whether each target commodity is put in or taken out of the shopping cart according to the direction and the distance, and then accurately detects an abnormal shopping behavior of the user according to the state.

To sum up, the embodiment of the present disclosure can accurately detect the abnormal shopping behavior for the intelligent shopping cart.

Those skilled in the art should appreciate that any embodiment of the present disclosure can be provided as a method, a system or a computer program product. Therefore, the present disclosure can take the form of a full hardware embodiment, a full software embodiment, or an embodiment combining software and hardware. Moreover, the present disclosure can take the form of a computer program product implemented on one or more computer usable storage mediums (including, but not limited to, a magnetic disc memory, CD-ROM, optical storage, etc.) containing therein computer usable program codes.

The present disclosure is described with reference to a flow diagram and/or a block diagram of the method, apparatus (system) and computer program product according to the embodiments of the present disclosure. It shall be appreciated that each flow and/or block in the flow diagram and/or the block diagram and a combination of flows and/or blocks in the flow diagram and/or the block diagram can be realized by computer program instructions. Those computer program instructions can be provided to a general computer, a dedicated computer, an embedded processor or a processor of other programmable data processing device to produce a machine, so that the instructions executed by the processor of the computer or other programmable data processing device produce device for realizing specified functions in one or more flows in the flow diagram and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device which realizes function(s) specified in one or more flows in the flow diagram and/or one or more blocks in the block diagram.

These computer program instructions may also be loaded onto the computer or other programmable data processing devices, so that a series of operation steps are performed on the computer or other programmable data processing devices to produce a processing realized by the computer, thus the instructions executed on the computer or other programmable devices provide step(s) for realizing function(s) specified in one or more flows in the flow diagram and/or one or more blocks in the block diagram.

The above specific embodiments further explain the objectives, technical solutions and advantageous effects of the present disclosure in detail. As should be understood, those described above are merely specific embodiments of the present disclosure, and are not intended to limit the protection scope of the present disclosure. Any modification, equivalent substitution, improvement, etc. made within the spirit and principle of the present disclosure should be included in the protection scope of the present disclosure.

## Claims

1. An abnormal shopping behavior detection method for an intelligent shopping cart, comprising:
acquiring video-frame image data of a code scanning area and video-frame image data of a basket area during the shopping behavior of the user;
acquiring image data of each target commodity in the code scanning area in the video-frame image data of the code scanning area within a preset time threshold range and image data of each target commodity in the basket area in the video-frame image data of the basket area within the preset time threshold range;
calculating a similarity between the image data of each target commodity in the code scanning area and the image data of each target commodity in the basket area; and
determining, when the similarity is less than a preset commodity similarity threshold, a wrong scanning behavior by the user.

2. The method according to claim 1, further comprising:
prompting the user to take out the wrongly put in commodity from the shopping cart, delete a commodity item corresponding to the wrongly put in commodity from an interaction screen, and scan the commodity again and then put in the commodity.

3. The method according to claim 1, wherein the calculating a similarity between the image data of each target commodity in the code scanning area and the image data of each target commodity in the basket area comprises one selected from the group consisting of: a similarity of commodity appearance characteristics, a color similarity, a texture similarity, a size difference.

4. The method according to claim 1, wherein the acquiring the image data of each target commodity in the basket area in the video-frame image data of the basket area comprises:
segmenting the commodities in an image of the video-frame image data of the basket area, to obtain the image data of each target commodity in the basket area in the image.

5. The method according to claim 4, wherein the segmenting the commodities in the image of the video-frame image data of the basket area, to obtain the image data of each target commodity in the basket area in the image comprises:
segmenting the commodities in the image of each frame in the video-frame image data of the basket area, to output first target masks including each target commodity, and forming a target commodity set according to each target commodity, the corresponding first target masks and image information;
segmenting an interferent in the image of each frame in the video-frame image data of the basket area, to output a second target mask including a target interferent, wherein the interferent is a non-commodity object;
calculating an intersection over union of the first target mask of the target commodity and the second target mask of the target interferent, to obtain a ratio of overlapping areas of the first target mask and the second target mask; and
eliminating, when the ratio of overlapping areas of the first target mask and the second target mask is greater than a preset overlapping ratio threshold, the target commodity included in the first target mask as the interferent from the target commodity set.

6. The method according to claim 5, further comprising: determining that the commodity included in the first target mask is a real commodity and remaining the commodity in the target commodity set, when the ratio of overlapping areas is less than the preset overlapping ratio threshold.

7. The method according to claim 5, further comprising: filtering out a target commodity in motion from the target commodity set and adding the target commodity in motion into a final target commodity set, wherein the image data of each target commodity in the basket area among the images of the plurality of frames is commodity data taken from the final target commodity set;

8. The method according to claim 7, wherein the filtering out the target commodity in motion from the target commodity set and adding the target commodity in motion into the final target commodity set comprises:
calibrating an area of motion pixels in the image of each frame in the target commodity set, and extracting a binary image mask corresponding to the calibrated area as a foreground mask of the image of each frame;
cropping a cropped mask at the same position as the first target mask on the foreground mask, and calculating an intersection over union of the cropped mask and the first target mask, to obtain a ratio of overlapping areas of the cropped mask and the first target mask; and
determining, when the ratio of overlap areas between the cropped mask and the first target mask is greater than a preset overlapping ratio threshold, the target commodity included in the first target mask being in motion, and adding the target commodity in motion into the final target commodity set.

9. The method according to claim 1, further comprises:
tracking a trajectory of each target commodity according to the image data of each target commodity in the basket area among images of a plurality of frames, to obtain trajectory tracking data of each target commodity;
determining a motion direction and a motion distance of the tracked trajectory of each target commodity according to the trajectory tracking data of each target commodity; and
determining an indicative state of whether each target commodity is put in or taken out of the shopping cart, according to the motion direction and the motion distance of the tracked trajectory of each target commodity and a preset commodity motion distance threshold.

10. The method according to claim 9, wherein determining the motion direction and the motion distance of the tracked trajectory of each target commodity according to the trajectory tracking data of each target commodity comprises:
sampling trajectory point set information including at least a starting point and an ending point in the trajectory for each tracked trajectory; and
inputting the trajectory point set information into a pre-trained trajectory machine learning model, to output the motion direction and the motion distance of the tracked trajectory of each target commodity.

11. The method according to claim 1, further comprises:
recording occurrence timing of an action of the user when the occurrence of the action of the user is detected in the basket area;
intercepting a video-frame image sequence to be detected from the video-frame image data of the basket area, based on the occurrence timing of the action of the user;
inputting the video-frame image sequence to be detected into a pre-trained action type recognition model to output action type data of the user; and
detecting the user's shielding behavior and shopping behavior with an abnormal action on the commodity according to the action type data.

12. An abnormal shopping behavior detection apparatus for an intelligent shopping cart, comprising:
an acquisition unit configured to acquire video-frame image data of a code scanning area and video-frame image data of a basket area during the shopping behavior of the user; and
a detection unit configured to acquire image data of each target commodity in the code scanning area in the video-frame image data of the code scanning area within a preset time threshold range and image data of each target commodity in the basket area in the video-frame image data of the basket area within the preset time threshold range; calculate a similarity between the image data of each target commodity in the code scanning area and the image data of each target commodity in the basket area; and determine, when the similarity is less than a preset commodity similarity threshold, a wrong scanning behavior by the user.

13. The apparatus according to claim 12, further comprises:
an action detection unit configured to record occurrence timing of an action of the user when the occurrence of the action of the user is detected in the basket area;
an interception unit configured to intercept a video-frame image sequence to be detected from the video-frame image data of the basket area, based on the occurrence timing of the action of the user;
a recognition unit configured to input the video-frame image sequence to be detected into a pre-trained action type recognition model to output action type data of the user; and
the detection unit further configured to detect the user's shielding behavior and shopping behavior with an abnormal action on the commodity according to the action type data.

14. An intelligent shopping cart, comprising:
a basket area collection device configured to collect video-frame image data of a basket area; and
the abnormal shopping behavior detection apparatus for the intelligent shopping cart according to claim 12 or 13.

15. A computer device, comprising a memory, a processor and a computer program stored in the memory and executable on the processor, wherein when executing the computer program, the processor implements the method according to any one of claims 1 to 11.
